Europäisches Patentamt

(19) European Patent Office

Office européen des brevets

(11) Publication number: **0 036 178**
A1

(12) **EUROPEAN PATENT APPLICATION**

(21) Application number: 81101793.8

(22) Date of filing: 11.03.81

(51) Int. Cl.³: **B 60 R 1/06**
**B 60 S 1/56**

(30) Priority: 18.03.80 IT 1248180

(43) Date of publication of application:
23.09.81 Bulletin 81/38

(84) Designated Contracting States:
AT BE CH DE FR GB IT LI LU NL SE

(71) Applicant: **Jemma, Orlando**
**Viale Varni 10/15**
**I-16137 Genova(IT)**

(72) Inventor: **Jemma, Orlando**
**Viale Varni 10./15**
**I-16137 Genova(IT)**

(74) Representative: **Porsia, Dino**
**c/o Succ. Ing. Fischetti & Weber Via Caffaro 3**
**I-16124 Genova(IT)**

(54) **Rear view mirror for vehicles.**

(57) The external rear view mirror for vehicles is provided with a mirror wiper blade carried by a slider (5) which is slidable in a rectilinear guide (7, 8, 10) along one side of the mirror (1) and it is driven into motion by a swinging arm (11) of variable working length, fulcrumed onto a fixed fulcrum point (12) in the median zone of the rectilinear guide and at a certain distance from said rectilinear guide. The swinging arm is on its turn driven into alternate swinging motion by means of a transmission (21, 22, 23 and 24, 25, 26) and of a rod-and-crank mechanism (17-18), by a small electric motor housed in the housing (2) of the rear view mirror.

Fig 2

EP 0 036 178 A1

Orlando JEMMA, Genoa (Italy)
"Rear view mirror for vehicles"

The present invention has for its object an external rear view mirror of substantially rectangular shape for vehicles, provided with a mirror wiper blade substantially parallel to one side of the mirror and actuated by a small electric motor housed in the mirror-carrying housing.

External rear view mirrors of this type, presenting a mirror wiper blade moving with an alternate rectilinear traslatory movement, are known for example from the U.S. patents No. 3 685 087, No. 3 855 661 and No. 3 866 258. The above known constructions present however the inconvenience that the means for guiding and for driving into motion the wiper blade are rather complicated, expensive, of relatively great size and easily damageable, so that, besides increasing too much the cost of production of the mirror and rendering comparatively difficult its manufacture, they increase in an undesirable manner the overall size of the rear view mirror and easily break down, thus putting out of operation the wiper blade.

The invention aims to eliminate the above mentioned inconveniences and has for its object to improve the rear view mirrors of the type referred to, in such a manner as to greatly simplify the means for driving into motion the wiper blade and reduce their cost, as well as to render the said driving means less subject to breakages and less cumbersome, so as to render more easy their construction and to remarkably reduce their costs, by reducing at the same time the size of the mirror-carrying housing and consequently the overall size of the rear view mirror, while guaranteeing the safe operation of the wiper blade.

According to the invention, in a rear view mirror of the above referred type, the wiper blade is carried by a slider which is slidably guided in a rectilinear guide along one side of the mirror, transversally to the said wiper blade, and which is hingedly connected to a swinging arm which is fulcrumed by its opposite end at a certain distance from the rectilinear guide, in correspondence of the median zone thereof, the working length of the said swinging arm between its fulcrum point and the hinge point to the slider being variable, while the electric motor is operatively connected to the swinging arm by means of a transmission which is adapted to impart to the said swinging arm an angular alternate movement, and consequently to the said slider carrying the wiper blade a rectilinear alternate movement.

According to different embodiments of the invention, the swinging arm presenting a variable working length may consist of a telescopic arm comprising two co-axial parts, of which at least one is tubular and houses the other one in a slidable manner. The swinging arm may also be made of two aligned rods of which one is guided longitudinally slidable within guides, preferably roller guides, provided on the other rod.

According to another embodiment, the swinging arm may simply consist of a single rod which is longitudinally slidable with respect to the fixed fulcrum.

The slider which carries the wiper blade may consist of a slide member or of a carriage, while the respective rectilinear guide may comprise guide portions such as ribs, grooves, steps or the like, integral with the mirror-carrying housing, preferably obtained of one piece with same, and provided on at least one side of the said slider. The rectilinear guide may, according to another embodiment, consist of one or more guide rods or bars, which are engaged in a slidable manner by through bores presenting a corresponding profile, obtained in the slider itself, and/or it may consist of a rectilinear slot provided in the front side of the mirror-carrying housing, through which slot there projects outwardly in a slidable manner a member integral with the said slider and carrying the wiper blade.

Also the transmission between the swinging arm and

– 4 –

the respective driving motor is subject to many variations. Preferably, the electric motor drives a crank mechanism through a belt transmission and/or a gear train transmission and/or an endless screw and helical wheel transmission.

In the above mentioned embodiments, the electric motor can rotate always in the same direction and its rotational movement is automatically transformed into the alternate angular movement of the swinging arm by the crank mechanism.

According to another possible embodiment, the electric motor is coupled to the swinging arm by means of a screw-
-and-nut transmission, and the swinging arm cooperates with limit commutators which automatically invert the direction of rotation of the electric motor.

The above and other characteristic features of the rear view mirror according to the invention, and the advantages deriving therefrom, will appear evident from the following detailed description of some preferred embodiments, made with reference to the attached drawings.

In the drawings:

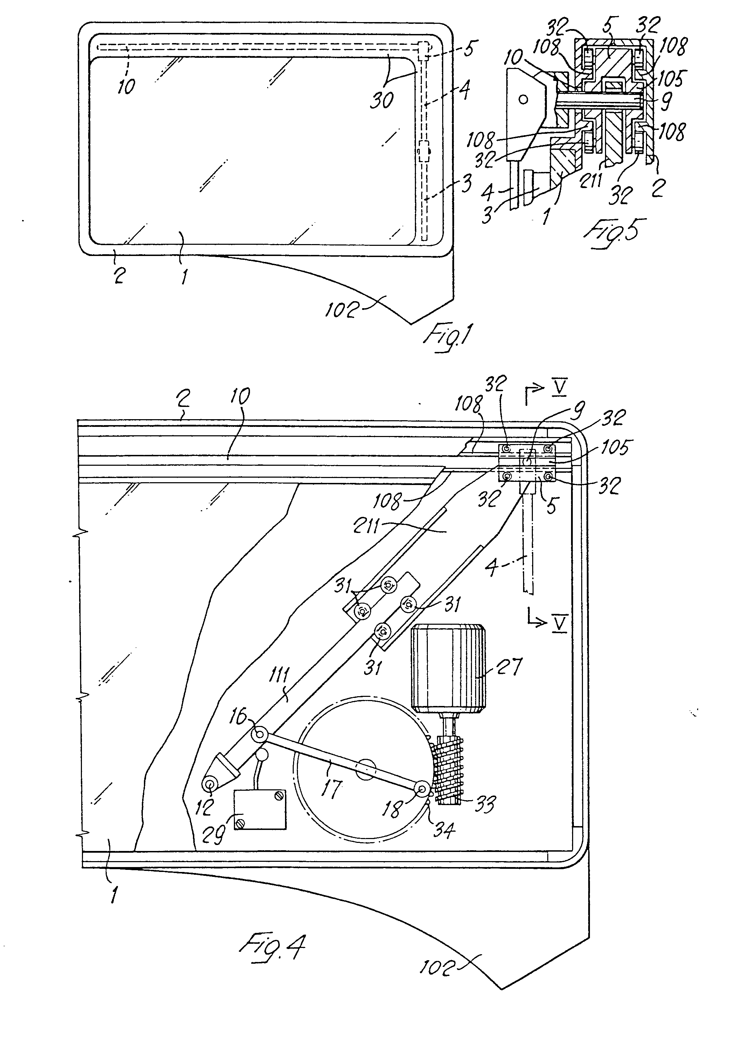

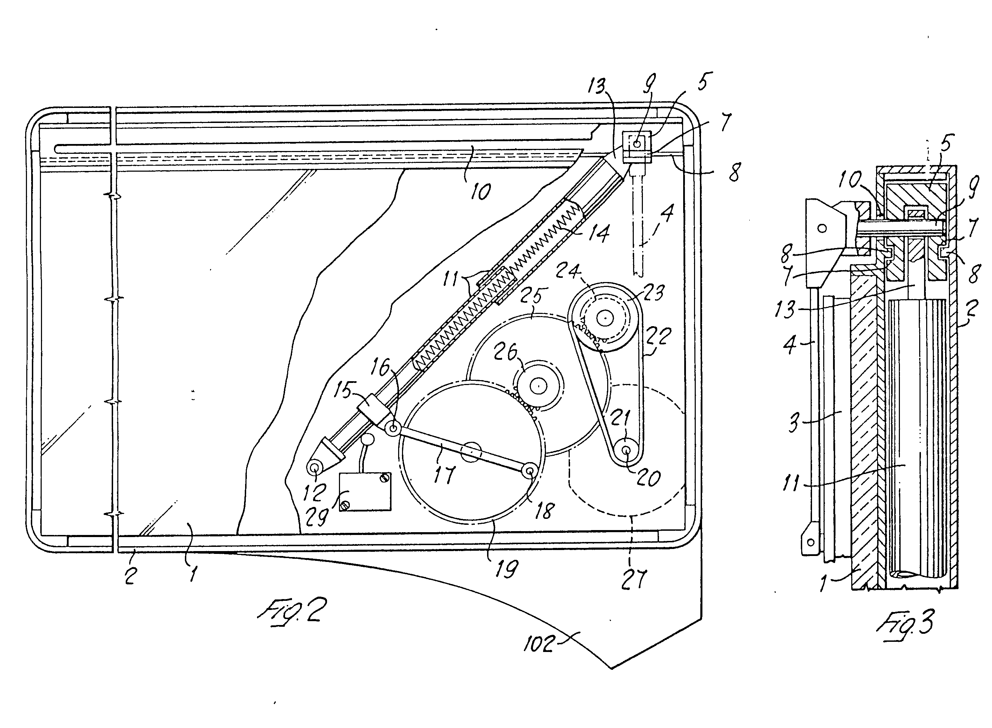

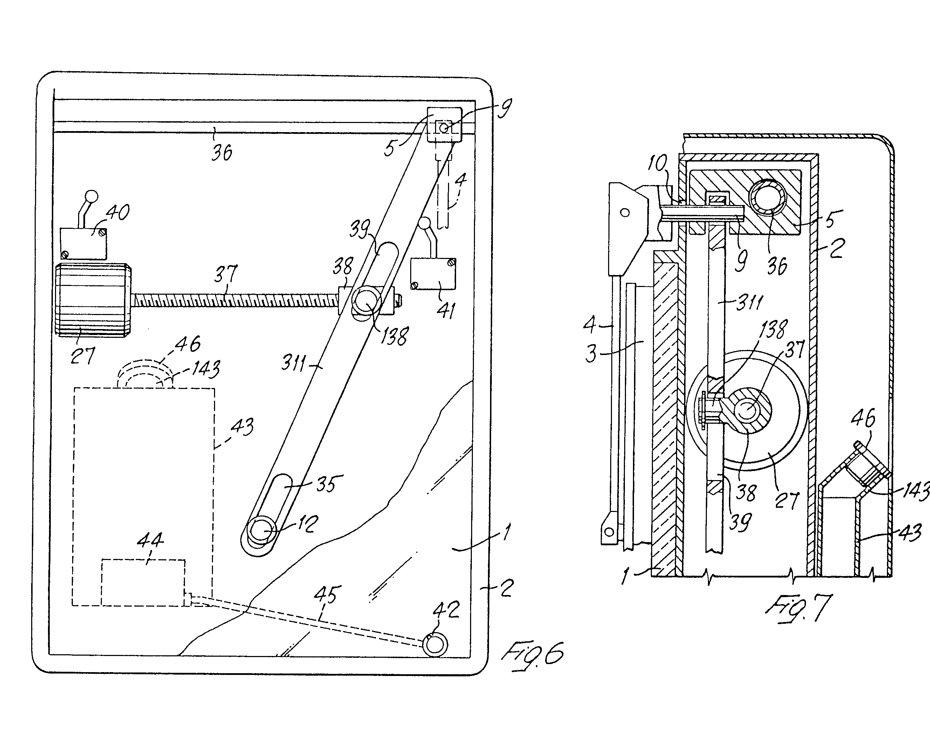

Figure 1 is a front elevation view of an external rear view mirror, provided with wiper blade, for vehicles.; Figure 2 shows a view in an enlarged scale with some parts omitted or sectioned, of a first embodiment of the means for driving the mirror wiper blade; Figure 3 shows in a still more enlarged scale and in side section the slider which carries the wiper blade; Figure 4 shows in front view, in a manner similar to Figure 2, a second embodiment of the means for driving the wiper blade; Figure 5 is a section in enlarged scale according to line V-V of Figure 4, through the slider carrying the wiper blade; Figure 6 shows in front view a third embodiment of the means fro driving the wiper blade; Figure 7 is a vertical section in an enlarged scale through the slider carrying the mirror wiper blade and across the swinging arm of the rear view mirror according to Figure 6.

In Figures 1 to 3 there is illustrated an external rear view mirror assembly for vehicles, such as automobiles, trucks and commercial vehicles, consisting of the proper mirror 1 and of a mirror-carrying housing 2, which is provided with brackets 102 adapted to mount the mirror assembly on either side of the vehicle (not shown) in a conventional manner.

The rear view mirror 1 is provided with a wiper blade which extends in a substantially vertical manner along the whole height of the substantially rectangular reflecting surface of the mirror 1, and moves horizontally with an alternating movement along the whole width of the said reflecting surface. For this purpose, the wiper blade 3 is connected, and for instance hingedly connected, directly or by means of an arm 4, to a slider 5 which is slidably mounted along the upper, substantially horizontal edge of the mirror-carrying housing 2.

For this purpose, the slider 5 presents a horizontal groove 7 on each of its two opposite sides and is mounted, by means of the said grooves 7, in a slidable manner on inner side ribs 8 provided at the inside of the housing 2 in its upper portion.The wiper blade 3 or the blade--carrying arm 4 are fixed or hinged to the outer end of a pin 9 which is secured to the slider 5 and moves along a slot 10 provided in the front side of the mirror-carrying housing 2, above the reflecting surface of mirror 1.

The driving members for the wiper blade 3 are housed at the interior of housing 2 and consist of a swinging telescopic arm 11 made of two tubular sections slidably inserted the one within the other. The said telescopic arm 11 is fulcrumed by its lower extremity to the housing 2 at a median lower point 12, while it is hinged by means of a small lug 13 to the pin 9 of slider 5. At the interior of the telescopic arm 11 there is housed a traction spring 14 which is secured by its ends to the two reciprocally slidable portions of the said telescopic arm 11.

A collar 15, secured to the telescopic arm 11, is hinged at 16 to a connecting rod 17 which is hinged to the crank pin 18 of a gear wheel 19 which is driven into rotation by a driving shaft 20 through a belt transmission 21, 22, 23 and a gear train 24, 25, 26. The driving shaft 20 may consist of the shaft of a small electric motor 27 housed at the interior of the mirror-carrying housing 2.

In its unoperative or rest position, the wiper blade 3 comes to be arranged near to one of the sides of the rear view mirror (at the right in Figures 1 and 2) and it is covered by a lip portion 30 of the housing 2. In this manner, the wiper blade 3 comes to be concealed in its rest position, does not obstruct the reflecting surface of the mirror 1 and it is also protected. The said lip portion extends also over the upper edge of the mirror 1 and conceals the slot 10 along which moves the slider 5, as illustrated in Figure 1.

By switching on a manual switch, the motor 20 is actuated thus causing the telescopic arm 11 to swing alternately in both directions around its fulcrum 12. The telescopic arm 11 by swinging draws the slider 5 and causes same to slide, together with the wiper blade 3, horizontally and alternately in both direction along its guides 8 and the upper slot 10, over the whole width of the mirror 1. The wiper blade 3 cleans in this manner the whole reflecting surface of the rear view mirror 2, without any reduction of its range of visibility. During the mentioned alternating motion of the wiper blade 3, the telescopic arm 11 automatically varies its working length.

The automatic switch 29 is opened for a short time whenever the wiper blade 3 is in its side rest position, concealed under the projecting lip portion 30, while it remains closed during the remaining movement of the wiper blade. Consequently whenever, in order to stop the wiper blade motion, the manual switch is opened, the electric circuit of the motor 27 results normally still closed through the automatic switch 29 which is opened only when the wiper blade reaches its rest position, thus stopping the motor 27 and consequently the blade 3 in the said rest position.

In the embodiment illustrated in Figures 4 and 5, similar parts are indicated with the same reference numerals, so that their description can be omitted. The swinging arm consists of a rod 111 fulcrumed by its lower extremity at 12 to the mirror-carrying housing and which engages with its upper extremity, in a longitudinally slidable manner, two or more pairs of guide rollers 31 mounted on another rod 211 which is aligned with the said first rod 111 and it is hinged at its upper extremity, by means of the pin 9, to the slider 5.

The above described embodiment of the swinging arm 111, 211 presents, with respect to the telescopic arm 11 according to Figure 2, the advantage of a lower friction, which favours the smoothness of sliding and avoids jammings.

The two rods 111, 211 may present any suitable section, while the rollers 31 will be shaped in a complementary manner to the rod 111, partially overlapping same so as to avoid any accidental disengagement of the two rods 111, 211.

Still with reference to the embodiment illustrated in Figures 4 and 5, the slider 5 is constructed as a carriage and it is provided on both sides with two pairs of rollers 32 which engage from above and from below the two guide ribs 108 provided at the interior of housing 2, as it appears clearly from Figure 5. The two guide ribs 108 on each side of the slider 5 are spaced apart between them, and the slider is slidably inserted between them with a median enlarged-section portion 105. In this manner, there is guaranteed a perfect guide of the slider along slot 10, with minimum friction and avoiding the danger of jammings.

Still referring to the embodiment of Figure 4, it is to be noted that the axis of the electric driving motor 27 is arranged parallelly to the plane of the mirror 1, which consents a reduction of the thickness of the housing 2. Moreover, the driving motor 25 actuates the swinging arm 111, 211 by means of an endless screw 33 and a helical wheel 34.

In Figures 6 and 7 there is shown another embodiment of the mirror assembly, in which the surface of the mirror extends preminently in the vertical direction. The swinging arm 311 is made of one single piece and consists for example of a rod which is fulcrumed, in correspondence of its lower extremity, on a fixed pin 12 by means of a longitudinal slot 35 so as to be capable of swinging and of axially sliding on the said pin 12.

The slider 5 which carries the wiper blade 3 is slidably mounted, by means of a through bore, on a guide rod 36 which may be of circular section or any other suitable shaped section. The electric motor 27 is arranged with its axis parallel to the plane of the mirror 1 and acts onto the swinging arm 311 by means of a screw shaft 37 and a nut 38 which presents a pin member 138 engaging a corresponding longitudinal slot 39 obtained in the swinging arm 311. In order to obtain the alternate swinging movement of the swinging arm 311, the direction of rotation of the electric motor 27 is inverted under the action of the swinging arm 311 itself by means of two limit commutators 40 and 41 actuated thereby. One of the two commutators 40, 41, performs also the same function of the automatic switch 29 described with reference to Figure 1 to 3, in order to stop the wiper blade 3 in its rest position on one side of the mirror surface.

The rear view mirror assembly according to the invention may be provided with a device for spraying a detergent liquid, as illustrated in the embodiment of Figures 6 and 7. On the outer surface of the mirror 1 and/or on the housing 2, there can be provided one or more spraying nozzles 42, which direct their jets against the mirrir surface. At the interior of the housing 2 there is provided a small tank 43 for the detergent liquid, with a filler pipe 143 and a respective cap 46, connected to the spraying nozzle 42 by means of a small pump 44 and a pipe 45. The spraying of the detergent liquid is caused by suitably acting on the pump 44, upon control of the driver of the vehicle. For this purpose, any suitable remote control of known type may be employed.

From the above it appears evident that in the rear view mirror according to the present invention, the members for driving the wiper blade into rectilinear alternate motion present, in all the illustrated embodiments, a great simplicity of construction, so that the rear view mirror can be easily constructed at low costs, although being provided with a wiper blade.

Moreover, the said driving members present limited dimensions and they are constructed and disposed according to a "flat" arrangement, so that they can be housed at the interior of the housing conventional type mirror without increasing the volume or modifying the outer appearance of the said housings, or they just require slight modifications in the shape and/or dimensions of the said housings. At the same time, the driving members according to the invention are of strong construction and cannot be easily damaged, thus guaranteeing a safe and perfect operation, with no possibilities of jamming.

The rear view mirror according to the invention may be also provided with at least one electric heating resistance, in order to avoid ice incrustations.

## CLAIMS

1) An external rear view mirror of substantially rectangular shape for vehicles, presenting a wiper blade (3) substantially parallel to one side of the mirror and slidably guided along one other side of the mirror transversal thereto, the movement to the said wiper blade being imparted by an electric motor housed in the mirror housing (2), characterized by the fact that the wiper blade (3) is carried by a slider (5) which is slidably guided on a rectilinear guide (7, 8, 10, 108, 36) along one side of the mirror (1), transversally with respect to the wiper blade (3) itself, said slider (5) being hinged to a swinging arm (11, 111, 211, 311) which is fulcrumed by its opposite extremity at a distance from the said rectilinear guide in correspondence of the median zone thereof, the working length of the said swinging arm between the fulcrum point (12) and the hinge point (9) to the slider being variable, while the electric motor (27) is operatively connected to the swinging arm by means of a transmission which is adapted to impart to the said swinging arm an alternate angular movement, and consequently to impart to the slider which carries the wiper blade a corresponding alternate rectilinear motion.

2) A rear view mirror according to claim 1, characterized by the fact that the swinging arm consists of a telescopic arm (21) comprising two coaxial portions, of which at least one is tubular and houses the other one in a slidable manner.

3) A rear view mirror according to claim 1, characterized by the fact that the swinging arm consists of two aligned rods, of which one (111) is guided longitudinally slidable inside guides, preferably roller guides (31), provided on the other rod (211).

4) A rear view mirror according to claim 3, characterized by the fact that the rollers of the roller guides rotatably mounted on one of the two rods forming the swinging arm, are shaped in such a manner as to at least partially overlap over at least one side of the other rod which is slidable between them.

5) A rear view mirror according to claim 1, characterized by the fact that the swinging arm consists of one single rod (311), preferably of one piece, which is longitudinally slidable with respect to a fixed fulcrum (12).

6) A rear view mirror according to claim 5, characterized by the fact that the rod (311) forming the swinging arm presents a longitudinal slot (35) which is engaged in a slidable manner by a fixed pin (12) which constitutes the fulcrum of the said swinging arm.

7) A rear view mirror according to claim 1, characterized by the fact that the slider (5) which carries the wiper blade (3) consists of a slide member.

8) A rear view mirror according to claim 1, characterized by the fact that the slider (5) which carries the wiper blade consists of a roller carriage.

9) A rear view mirror according to claim 1, characterized by the fact that the rectilinear guide for the slider (5) which carries the wiper blade, comprises guiding portions such as ribs (8, 108) grooves, steps or the like, integral with the mirror-carrying housing, preferably obtained of one piece with same, and provided on at least one side of said slider (5).

10) A rear view mirror according to claim 1, characterized by the fact that the rectilinear guide for the slider (5) which carries the wiper blade comprises at least one guide rod (36) which is engaged in a slidable manner by through bores provided in the said slider (5).

11) A rear view mirror according to claim 1, characterized by the fact that the rectilinear guide for the slider (5) which carries the wiper blade (3) comprises a rectilinear slot (10) provided in the front side of the mirror-carrying housing (2), through which slot there projects towards the exterior a member (9) which is integral with the said slider (5) and which carries the wiper blade (3).

12) A rear view mirror according to claim 1, characterized by the fact that the electric motor (27) drives a crank (18) connected by means of a connecting rod (17) to the swinging arm (11, 111, 211).

13) A rear view mirror according to claim 12, characterized by the fact that the electric motor (27) drives the crank (18) through a belt transmission (21, 22, 23) and/or a gear train transmission (24, 25, 26, 19).

14) A rear view mirror according to claim 12, characterized by the fact that the electric motor (27) drives the crank (18) by means of an endless screw and helical wheel (33, 34) transmission.

15) A rear view mirror according to claim 1, characterized by the fact that the electric motor (27) is coupled to the swinging arm (311) by means of a screw and nut transmission (37, 38, 138), while the swinging arm cooperates with limit commutators which invert at every operation the direction of rotation of the electric motor.

16) A rear view mirror according to claim 1, characterized by the fact that it presents at least one external spraying nozzle (42) directed towards the reflecting surface of the mirror and connected by means of a pump (44) to a container (43) for a detergent liquid, housed at the interior of the mirror-carrying housing (2).

17) A rear view mirror according to claim 1, characterized by the fact that the electric circuit of the motor (27) which drives the wiper blade (3) can be closed by means of two switches arranged in parallel, one of said switches being manually operated and serving for the switching-on and -off, while the other switch (29, 40, 41) can be opened for a short time automatically under the action of a movable member of the wiper blade assembly, such as the swinging arm (11, 111, 211, 311), whenever the wiper blade (3) comes to be in rest position, in correspondence of a marginal zone of the mirror.

18) A rear view mirror according to claim 17, characterized by the fact that the wiper blade (3), in its rest position in correspondence of one marginal zone of the mirror, is covered by a projecting lip portion (30) of the mirror-carrying housing (2).

Fig.1

Fig.5

Fig.4

Fig. 2

Fig. 3

2|3

0036178

Fig.6

Fig.7

# EUROPEAN SEARCH REPORT

**European Patent Office**

| | DOCUMENTS CONSIDERED TO·BE RELEVANT | | CLASSIFICATION OF THE APPLICATION (Int. Cl ³) |
|---|---|---|---|
| Category | Citation of document with indication, where appropriate, of relevant passages | Relevant to claim | |
| | GB - A - 1 468 759 (CIBIE PROJECTEURS) <br> * fig. 1 * <br> -- | 1,5,6 | B 60 R 1/06 <br> B 60 S 1/56 |
| | US - A - 2 677 844 (D. McGLASSON, SR.) <br> * fig. 1 * <br> -- | 1,2 | |
| | DE - U1 - 7 910 493 (R. KÜHN) <br> * fig. 1, 2 * <br> -- | 7,16 | |
| D,A | US - A - 3 866 258 (F.B. DeGRAW) <br> -- | | TECHNICAL FIELDS SEARCHED (Int. Cl ³) |
| D,A | US - A - 3 855 661 (L.R. PRINCE) <br> -- | | |
| D,A | US - A - 3 685 087 (M.B. PITTMAN ) <br> ----- | | B 60 R 1/00 <br> B 60 S 1/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 10-06-1981 | BECKER |

EPO Form 1503.1  06.78